# EUROPÄISCHE PATENTSCHRIFT

(11) **EP 3 228 891 B1**
(45) Veröffentlichungstag und Bekanntmachung des Hinweises auf die Patenterteilung: **25.11.2020**
(21) Anmeldenummer: 17000526.8
(22) Anmeldetag: 30.03.2017
(51) Int. Cl.: F16C 43/02, F16C 17/02, F16C 17/24, B25B 27/06, B25B 27/00, F16C 9/04

(54) **VORRICHTUNG UND VERFAHREN ZUM ZURÜCKSETZEN EINER AUS EINER AUFNAHME AUF EINER WELLE HERAUSGERUTSCHTEN LAGERSCHALE**
DEVICE AND METHOD FOR RESETTING A BEARING SHELL WHICH HAS SLID OUT OF A RECESS ON A SHAFT
DISPOSITIF ET PROCÉDÉ DESTINÉ À FAIRE RECULER UN COUSSINET DE PALIER SORTI DE SON LOGEMENT SUR UN ARBRE

(30) Priorität: 06.04.2016 DE 102016004154
(43) Veröffentlichungstag der Anmeldung: 11.10.2017
(73) Patentinhaber: MAN Truck & Bus SE, 80995 München (DE)
(72) Erfinder: Langer, Christoph, 90547 Stein (DE); Langer, Alexander, 90451 Nürnberg (DE)
(74) Vertreter: Liebl, Thomas

(56) Entgegenhaltungen:
- CN-U- 204 985 303
- DE-A1-102008 009 872
- DE-C1- 10 064 981
- US-A- 4 233 864
- US-A1- 2015 040 401

## Beschreibung

Die Erfindung betrifft eine Vorrichtung zum Zurücksetzen einer aus einer Aufnahme auf einer Welle zumindest teilweise herausgerutschten Lagerschale nach dem Oberbegriff des Anspruchs 1 sowie ein ebensolches Verfahren nach dem Oberbegriff des Anspruchs 11.

Es ist ein allgemein bekanntes Problem, dass beim Einlegen einer Lagerschale in eine Aufnahme, zum Beispiel einer Pleuelstange diese zumindest teilweise wieder herausgedrückt und herausrutschen kann. Es ist dann erforderlich, diese herausgerutschte Lagerschale wieder in das Aufnahmeauge zurückzudrücken und einzuschieben.

Speziell kann dieses Problem bei der Montage einer Pleuelstange mit eingelegten Pleuellagerschalen an einer Kurbelwelle einer Brennkraftmaschine auftreten, wenn Pleuellagerschalen bei der Montage in Umfangsrichtung herausgerutscht sind, bevor bei einem geteilten Pleuelauge ein aufschraubbares Deckelteil fest verschraubt ist. Herausgerutschte Pleuellagerschalen werden bisher irgendwie durch Schlagen und/oder Drücken mit irgendwelchen Gegenständen in das Pleuelauge zurückgesetzt. Da aber Lagerschalen meist mechanisch leicht verletzbar sind, insbesondere Pleuellagerschalen zum Teil auch aus weichen Werkstoffen bestehen, kann es dabei zu Beschädigungen, insbesondere von Pleuellagerschalen an Schlagstellen kommen. Zudem sind bei durch Cracken geteilten Pleuelaugen benachbarte Crackflächen beim Zurücksetzen von herausgerutschten Lagerschalen an Schlagstellen gefährdet, wobei Crackpartikel abgeschlagen werden können. Die Gefahr eines späteren Motorschadens aufgrund von Schlagstellen an den Pleuelschalen und/oder durch Einbettung von abgeschlagenen Crackpartikeln ist gegeben und bekannt.

US 4 233 864 A offenbart die Merkmale des Oberbegriffs von Anspruch 1. Aufgabe der Erfindung ist es, eine Vorrichtung und ein Verfahren zum Zurücksetzen einer aus einer Aufnahme auf einer Welle zumindest teilweise herausgerutschten Lagerschale vorzuschlagen, mit der eine Beschädigung der Lagerschale und gegebenenfalls des Aufnahmeauges beim Zurücksetzen der Lagerschale vermieden werden kann.

Diese Aufgabe wird gelöst mit den Merkmalen der unabhängigen Ansprüche. Vorteilhafte Ausgestaltungen sind Gegenstand der Unteransprüche.

Gemäß Anspruch 1 wird eine Vorrichtung zum Zurücksetzen einer aus einer Aufnahme auf einer Welle zumindest teilweise herausgerutschten Lagerschale vorgeschlagen. Erfindungsgemäß ist vorgesehen, dass die Vorrichtung als handbetätigbares Werkzeug ausgebildet ist. Weiter weist das Werkzeug ein Schalenelement in der Form eines Kreiszylinderausschnitts auf, bevorzugt dergestalt, dass die Wandstärke und der Kreiszylinderradius des Kreiszylinderausschnitts wenigstens bereichsweise dem der zurückzusetzenden, teilkreiszylindrischen Lagerschale angepasst sind, wobei besonders bevorzugt vorgesehen ist, dass die Wandstärke und der Kreiszylinderradius des Kreiszylinderausschnitts gleich bzw. in etwa gleich dem der zurückzusetzenden, teilkreiszylindrischen Lagerschale sind.

An der konvexen Seite der Schalenelementwand ist weiter ein davon abragender und vorzugsweise fest verbundener Haltestab mit einem endseitigen Handgriff vorgesehen bzw. angebracht.

Dieses Werkzeug ist dazu geeignet und bestimmt, dass es mit dem Schalenelement mittels des Handgriffs und des anschließendes Haltestabs mit seiner konkaven Seite formschlüssig auf eine Welle vor einer herausgerutschten Lagerschale aufsetzbar ist. Durch ein radiales Verschieben in Umfangsrichtung auf der Welle und einen radialen Druck auf die Lagerschale ist diese einfach und schonend in die Aufnahme zurücksetzbar. Besonders vorteilhaft ist dabei die stirnseitige gleichflächige Anlage des Schalenelementes an der Lagerschale, welche durch die gleichen Wandstärken und gleichen Kreiszylinderradien erreicht wird. Durch ein gleichmäßiges radiales Drücken und Verschieben des Schalenelements auf der Welle beim Zurücksetzen einer Lagerschale kann damit eine Beschädigung der Lagerschale als auch der Aufnahme sicher ausgeschlossen werden. Das Werkzeug ist insbesondere geeignet für teilkreiszylindrische Lagerschalen, insbesondere für zwei Lagerschalen die im Aufnahmeauge zu einer Lagerbuchse zusammengesetzt sind. Das Werkzeug kann aber auch für eine einteilige Lagerschale verwendet werden.

Eine ergonomisch gute Handhabung des Werkzeugs wird erreicht, wenn der Haltestab etwa in einer Radialebene abragend und in der axialen Längsmitte am Schalenelement angebracht ist.

Für eine bequeme Anwendung des Werkzeugs in Verbindung mit einer geeigneten Schubkraftaufbringung soll die Länge des Haltestabs weder zu kurz noch zu lang ausgebildet sein. Bewährt hat sich eine Ausführungsform, bei der der Handgriff mit einer Steckverbindung auf den Haltestab aufgesteckt ist und die freie Länge des Haltestabs etwa die Länge des Handgriffs aufweist.

Die Verbindung des Schalenelements mit dem Haltestab, der vorzugsweise als Metallstab bzw. als Haltestab aus einem metallischen Werkstoff ausgeführt ist, kann sowohl eine lösbare als auch eine unlösbare Verbindung sein. Eine derartige Verbindung kann zum Beispiel durch Aufschrauben und/oder Auflöten und/oder Aufkleben und/oder Aufklemmen erfolgen. Zweckmäßig ist die Verbindung lösbar, sodass das Schalenelement bei einem Verschleiß einfach austauschbar ist.

Für eine gegebenenfalls universellere Handhabung kann der Winkel zwischen dem Schalenelement und dem Handgriff vorzugsweise in einer Radialebene einstellbar ausgeführt sein. Dazu kann eine fixierbare Gelenkverbindung zwischen dem Schalenelement und dem Haltestab und/oder im Haltestab und/oder zwischen dem Haltestab und dem Handgriff angeordnet werden.

Für ein einfaches Aufsetzen des Schalenelements auf die Welle soll der Kreiszylinderausschnitt des Schalenelements einen Winkelwert kleiner als 180°, vorzugsweise einen Winkelwert zwischen 90° und 180°, aufweisen, so dass damit jedenfalls noch eine geeignete gegenseitige Anlagefläche zwischen dem Schalenelement, der Welle und der Lagerschale gegeben ist.

Besonders bevorzugt wird das Werkzeug für die Verwendung in Verbindung mit einer Pleuelmontage auf einer Kurbelwelle einer Brennkraftmaschine ausgelegt und angepasst, so dass mit dem Werkzeug eine aus einem Pleuelauge einer Pleuelstange herausgerutschte Pleuellagerschale durch gleichmäßiges Drücken wieder zurück in ein Pleuelauge gesetzt werden kann. Dementsprechend ist die Aufnahme bevorzugt ein Pleuelauge, insbesondere das größere Pleuelauge einer Pleuelstange, einer Brennkraftmaschine und die Lagerschale eine Pleuellagerschale. Die Welle ist dann in diesem Fall bevorzugt eine Kurbelwelle.

Besonders geeignet ist der Einsatz des Werkzeugs bei der Montage von Pleuelstangen mit den üblicherweise geteilten Pleuelaugen und/oder mit einem aufschraubbaren Deckelteil, bevor dieses zur Fixierung der Pleuellagerschalen fest verschraubt wird. Da insbesondere Pleuellagerschalen aus zum Teil weichen Werkstoffen bestehen, ist hier ein gleichmäßiges Drücken auf eine Lagerschalenkante zur Vermeidung von Beschädigungen wesentlich. Geteilte Pleuelaugen werden regelmäßig durch Cracken hergestellt, wobei die benachbarten Crackflächen randseitig besonders empfindlich für ein Abplatzen von Crackpartikeln sind. Durch den hier gegebenen gleichmäßigen Druck auf die Lagerschalenkante mit der gleichen Flächenbreite ist auch die Gefahr eines Abplatzens von Crackpartikeln aus den benachbarten Crackflächen behoben.

In einer besonders bevorzugte Weiterbildung wird vorgeschlagen, dass allgemein der Wandaufbau des Schalenelements den gleichen Wandaufbau wie die Lagerschale hat, da damit eine besonders gleichmäßige Kraftaufbringung beim Zurücksetzen der Lagerschale möglich ist. Besonders vorteilhaft ist dies bei einem Schalenelement zur Verwendung mit einer herausgerutschten Pleuellagerschale, wenn das Schalenelement den gleichen Wandaufbau wie die Pleuellagerschale aufweist. Konstruktiv kann dies einfach dadurch erreicht werden, dass das Schalenelement aus einer Pleuellagerschale hergestellt wird, wie sie für den vorgesehenen Werkzeugeinsatz bei der Montage verwendet werden.

Weiter wird ein Verfahren und ein Fahrzeug, insbesondere ein Nutzfahrzeug, beansprucht, zur Verwendung einer Vorrichtung als Montagevorrichtung entsprechend der vorstehenden Ausführungen. Für diesbezügliche weitere Ausgestaltungen und Vorteile wird auf die zuvor gemachten Ausführungen verwiesen.

Anhand einer Zeichnung wird die Erfindung weiter erläutert.

Es zeigen:
- Fig. 1: eine perspektivische Darstellung eines Werkzeugs,
- Fig. 2: eine Draufsicht auf das Werkzeug nach Fig. 1 in Richtung der Konkavseite eines Schalenelements,
- Fig. 3: eine Darstellung des Werkzeugs der Fig. 1 und 2 in Axialrichtung des Schalenelements in einer Ausführungsform mit einem Schwenkgelenk, und
- Fig. 4: einen Werkzeugeinsatz in einer schematischen, beispielhaften Darstellung in Axialrichtung einer Kurbelwelle.

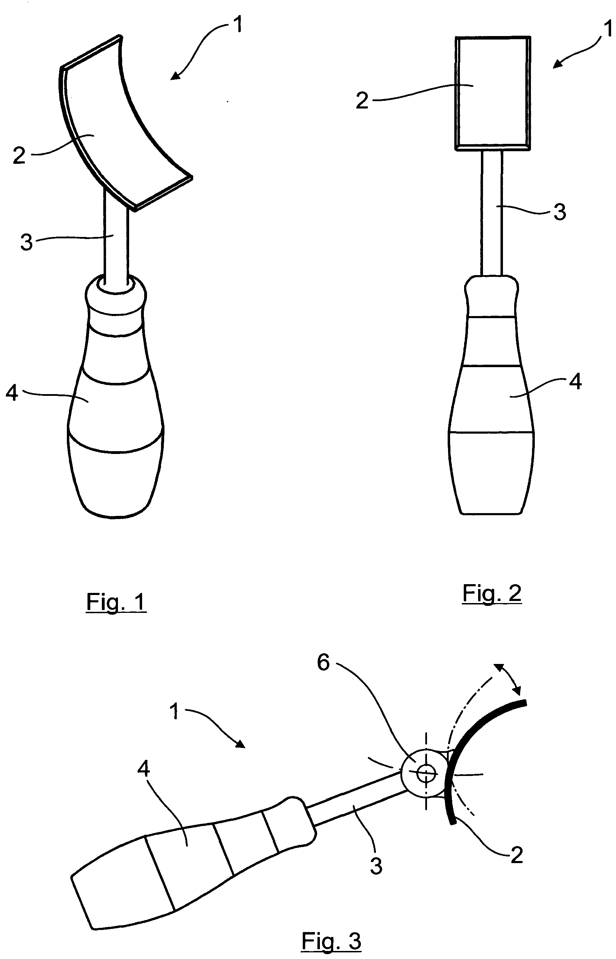

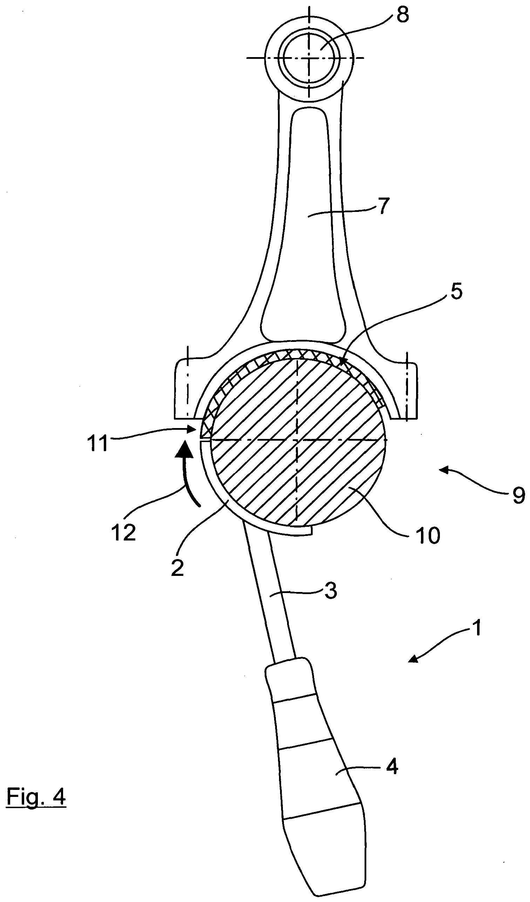

In den Fig. 1 bis 3 ist ein Werkzeug 1 zum Zurücksetzen einer aus einem Aufnahmeauge auf einer Welle herausgerutschten Lagerschale dargestellt, das aus einem Schalenelement 2, einem Haltestab 3 und einem darauf aufgesteckten Handgriff 4 besteht. Das hier beispielhaft dargestellte konkrete Werkzeug 1 ist für die Verwendung und den Einsatz in Verbindung mit herausgerutschten Pleuellagerschalen 5 ausgeführt, wie dies anhand der Fig. 4 nachstehend erläutert ist.

Dazu ist das Schalenelement 2 entsprechend der Pleuellagerschale 5 mit gleicher Wandstärke, gleichem Schalenradius und gleichem Wandaufbau hergestellt, bzw. aus einer entsprechenden Pleuellagerschale mit einem Winkelausschnitt kleiner 180° hergestellt.

An der konvexen Seite des Schalenelements 2 ist etwa in der axialen Mitte der Haltestab 3, gegebenenfalls über ein fixierbares Schwenkgelenk 6 befestigt, so dass er vom Schalenelement 2 etwa in einer Radialebene abragt. Der auf den Haltestab 3 aufgesteckte Handgriff 4 ist etwa so lang wie die freie Länge des Haltestabs 3.

In Fig. 4 ist beispielhaft und schematisch eine Pleuelstange 7 dargestellt mit einem kleineren Pleuelauge 8 zur Verbindung mit einem Kolben einer Brennkraftmaschine und mit einem großen Pleuelauge 9, welches hier durch Cracken zweigeteilt ist, wobei ein (nicht dargestellter und später montierbarer) Pleueldeckel zur Ausbildung des Pleuelauges 9 mit Schraubverbindungen aufschraubbar ist.

Zur Pleuelstangenmontage ist hier die Pleuelstange 7 mit dem halben Pleuelauge 9 bereits auf eine Kurbelwelle 10 mit einliegender Pleuellagenschale 5 aufgesetzt, welche durch das Aufsetzen auf die Kurbelwelle 12 teilweise in Umfangsrichtung mit einem Überstand 11 herausgerutscht ist. Daher ist es erforderlich, die herausgerutschte Pleuellagerschale 5 wieder zurück in den Bereich des halben Pleuelauges 9 vor einer Montage eines Pleueldeckels zurückzusetzen.

Dazu wird das Werkzeug 1 mit dem Schalenelement 2 mit dessen konkaver Seite formschlüssig auf die Kurbelwelle 12 vor der aus dem Pleuelauge 9 herausgerutschten Pleuellagerschale 5 aufgesetzt und stirnseitig am Überstand 11 zur Anlage gebracht, wie dies in Fig. 4 dargestellt ist.

Mit einem mäßigen Druck in Radialrichtung und einer Verschiebung in Umfangsrichtung des Schalenelements 2 (Pfeil 12)) wird dann die Pleuellagerschale 5 schonend ohne Beschädigungen an dieser Pleuellagerschale 5 oder dem Pleuelauge 9 in dessen Bereich zurückgeschoben.

### Bezugszeichenliste

- 1: Werkzeug
- 2: Schalenelement
- 3: Haltestab
- 4: Handgriff
- 5: Pleuellagerschale
- 6: Schwenkgelenk
- 7: Pleuelstange
- 8: kleines Pleuelauge
- 9: großes Pleuelauge
- 10: Kurbelwelle
- 11: Überstand
- 12: Pfeil

## Patentansprüche

1. Vorrichtung zum Zurücksetzen einer aus einer Aufnahme auf einer Welle zumindest teilweise herausgerutschten Lagerschale,
wobei die Vorrichtung als handbetätigbares Werkzeug (1) ausgebildet ist,
wobei das Werkzeug (1) ein Schalenelement (2) in der Form eines Kreiszylinderausschnitts aufweist,
**dadurch gekennzeichnet,**
**dass** an der konvexen Seite der Schalenelementwand ein davon abragender Haltestab (3) mit einem endseitigen Handgriff (4) vorgesehen ist,
wobei das Schalenelement (2) des Werkzeugs (1) mittels des Handgriffs (4) und des anschließenden Haltestabs (3) so ausgebildet ist, dass das Schalenelement (2) formschlüssig auf eine Welle (10) vor einer herausgerutschten Lagerschale (5) aufsetzbar und durch Verschieben in Umfangsrichtung und einen radialen Druck auf die Lagerschale (5) diese in die Aufnahme (9) zurücksetzbar ist.

2. Vorrichtung nach Anspruch 1, **dadurch gekennzeichnet, dass** der Haltestab (3) in einer Radialebene abragend und in der axialen Längsmitte am Schalenelement (2) angebracht ist.

3. Vorrichtung nach Anspruch 1 oder Anspruch 2, **dadurch gekennzeichnet, dass** der Handgriff (4) mit einer Steckverbindung auf den Haltestab (3) gesteckt ist und die freie Länge des Haltestabs (3) etwa die Länge des Handgriffs (4) aufweist.

4. Vorrichtung nach einem der vorhergehenden Ansprüche, **dadurch gekennzeichnet, dass** das Schalenelement (2) mit dem Haltestab (3), insbesondere mit einem Haltestab aus einem metallischen Werkstoff, lösbar oder unlösbar verbunden ist, vorzugsweise durch Aufschrauben und/oder Auflöten und/oder Aufkleben und/oder Aufklemmen verbunden ist.

5. Vorrichtung nach einem der vorhergehenden Ansprüche, **dadurch gekennzeichnet, dass** zwischen dem Schalenelement (2) und dem Haltestab (3) und/oder im Haltestab (3) und/oder zwischen Haltestab (3) und Handgriff (4) eine fixierbare Gelenkverbindung (6) für eine Winkeleinstellung angeordnet ist.

6. Vorrichtung nach einem der vorhergehenden Ansprüche, **dadurch gekennzeichnet, dass** der Kreiszylinderausschnitt des Schalenelements (2) einen Winkelwert kleiner 180°, vorzugsweise zwischen 90° und 180°, aufweist.

7. Vorrichtung nach einem der vorhergehenden Ansprüche, **dadurch gekennzeichnet, dass** die Aufnahme ein Pleuelauge (9), insbesondere das größere Pleuelauge einer Pleuelstange (7), einer Brennkraftmaschine ist und die Lagerschale eine Pleuellagerschale (5) ist, wobei bevorzugt vorgesehen ist, dass die Welle eine Kurbelwelle (10) ist.

8. Vorrichtung nach Anspruch 7, **dadurch gekennzeichnet, dass** das Pleuelauge (9) geteilt, vorzugsweise gecrackt, und/oder mit einem aufschraubbaren Pleueldeckelteil hergestellt ist.

9. Vorrichtung nach einem der vorhergehenden Ansprüche, **dadurch gekennzeichnet, dass** die Wandstärke und der Kreiszylinderradius des Schalenelements (2) wenigstens bereichsweise dem der zurückzusetzenden Lagerschale (5) angepasst sind, bevorzugt in etwa wenigstens bereichsweise gleich mit dem der zurückzusetzenden Lagerschale (5) sind.

10. Vorrichtung nach einem der vorhergehenden Ansprüche, **dadurch gekennzeichnet, dass** der Wandaufbau des Schalenelements (2) den gleichen Wandaufbau wie die Lagerschale (5) aufweist, wobei bevorzugt vorgesehen ist, dass ein Schalenelement (2) zur Verwendung mit einer herausgerutschten Pleuellagerschale (5) deren gleichen Wandaufbau aufweist und/oder vorzugsweise das Schalenelement (2) aus einer solchen Pleuellagerschale (5) hergestellt ist.

11. Verfahren zum Zurücksetzen einer aus einer Aufnahme auf einer Welle zumindest teilweise herausgerutschten Lagerschale mittels einer Vorrichtung,
**dadurch gekennzeichnet,**
**dass** die Vorrichtung als handbetätigbares Werkzeug (1) ausgebildet ist,
**dass** das Werkzeug (1) ein Schalenelement (2) in der Form eines Kreiszylinderausschnitts aufweist,
**dass** an der konvexen Seite der Schalenelementwand ein davon abragender Haltestab (3) mit einem endseitigen Handgriff (4) vorgesehen ist,
wobei das Schalenelement (2) des Werkzeugs (1) mittels des Handgriffs (4) und des anschließenden Haltestabs (3) formschlüssig auf die Welle (10) vor der herausgerutschten Lagerschale (5) aufgesetzt wird und dann durch Verschieben in Umfangsrichtung ein radialer Druck auf die Lagerschale (5) ausgeübt und diese in die Aufnahme (9) zurückgesetzt wird.

## Claims

1. Device for putting back a bearing shell which has slid at least partially out of a receiving part on a shaft,
wherein the device is in the form of a hand-operable tool (1),
wherein the tool (1) has a shell element (2) in the form of a circular-cylinder cutout, **characterized**
**in that**, on the convex side of the shell element wall, there is provided a retaining bar (3), projecting therefrom, with an end-side handle (4),
wherein the shell element (2) of the tool (1), by means of the handle (4) and the adjoining retaining bar (3), is designed such that the shell element (2) is able to be placed in a form-fitting manner onto a shaft (10) before a bearing shell (5) which has slid out, and, by way of movement in a circumferential direction and a radial pressure on the bearing shell (5), the latter is able to be put back into the receiving part (9).

2. Device according to Claim 1, **characterized in that** the retaining bar (3) is attached to the shell element (2) at the axial longitudinal centre and so as to project in a radial plane.

3. Device according to Claim 1 or Claim 2, **characterized in that** the handle (4) is plugged onto the retaining bar (3) by way of a plug connection, and the free length of the retaining bar (3) has approximately the length of the handle (4).

4. Device according to one of the preceding claims, **characterized in that** the shell element (2) is connected detachably or non-detachably to the retaining bar (3), in particular to a retaining bar composed of a metallic material, preferably by screwing and/or soldering and/or adhesive bonding and/or clamping.

5. Device according to one of the preceding claims, **characterized in that** a fixable articulated connection (6) for setting of an angle is arranged between the shell element (2) and the retaining bar (3) and/or in the retaining bar (3) and/or between the retaining bar (3) and the handle (4).

6. Device according to one of the preceding claims, **characterized in that** the circular-cylinder cutout of the shell element (2) has an angle value of less than 180°, preferably between 90° and 180°.

7. Device according to one of the preceding claims, **characterized in that** the receiving part is a connecting-rod eye (9), in particular the larger connecting-rod eye of a connecting rod (7), of an internal combustion machine, and the bearing shell is a rod bearing shell (5), wherein it is preferably provided that the shaft is a crankshaft (10).

8. Device according to Claim 7, **characterized in that** the connecting-rod eye (9) is produced so as to be split, preferably cracked, and/or with a connecting-rod cover part which is able to be screwed on.

9. Device according to one of the preceding claims, **characterized in that** the wall thickness and the circular-cylinder radius of the shell element (2) are matched at least regionally to those of the bearing shell (5) to be put back, preferably are approximately at least regionally equal to those of the bearing shell (5) to be put back.

10. Device according to one of the preceding claims, **characterized in that** the shell element (2) has the same wall structure as the bearing shell (5), wherein it is preferably provided that a shell element (2) for use with a connecting-rod bearing shell (5) which has slid out has its same wall structure, and/or preferably the shell element (2) is produced from such a connecting-rod bearing shell (5).

11. Method for putting back by means of a device a bearing shell which has slid at least partially out of a receiving part on a shaft,
**characterized**
**in that** the device is in the form of a hand-operable tool (1),
**in that** the tool (1) has a shell element (2) in the form of a circular-cylinder cutout,
**in that**, on the convex side of the shell element wall, there is provided a retaining bar (3), projecting therefrom, with an end-side handle (4),
wherein the shell element (2) of the tool (1), by means of the handle (4) and the adjoining retaining bar (3), is placed in a form-fitting manner onto the shaft (10) before the bearing shell (5) which has slid out, and then, by way of movement in a circumferential direction, a radial pressure is exerted on the bearing shell (5) and the latter is put back into the receiving part (9).

## Revendications

1. Dispositif prévu pour faire reculer un coussinet de palier ressorti au moins en partie hors d'un logement sur un arbre,
le dispositif étant réalisé sous forme d'outil manuel (1),
l'outil (1) présentant un élément de coque (2) en forme de portion cylindrique circulaire,
**caractérisé en ce**
**qu'**une barre de retenue (3) avec une poignée (4) à l'extrémité est prévue de manière à dépasser au niveau du côté convexe de la paroi de l'élément de coque,
l'élément de coque (2) de l'outil (1) étant réalisé, au moyen de la poignée (4) et de la barre de retenue (3) s'y raccordant, de telle sorte que l'élément de coque (2) puisse être posé par engagement par correspondance de formes sur un arbre (10) devant un coussinet de palier ressorti (5) et que par déplacement dans la direction périphérique et par une pression radiale appliquée sur le coussinet de palier (5), ce dernier puisse être reculé dans le logement (9).

2. Dispositif selon la revendication 1, **caractérisé en ce que** la barre de retenue (3) est montée sur l'élément de coque (2) au milieu longitudinal axial et de manière à faire saillie dans un plan radial.

3. Dispositif selon la revendication 1 ou la revendication 2, **caractérisé en ce que** la poignée (4) est enfichée sur la barre de retenue (3) avec une liaison par enfichage et la longueur libre de la barre de retenue (3) présente approximativement la même longueur que la poignée (4).

4. Dispositif selon l'une quelconque des revendications précédentes, **caractérisé en ce que** l'élément de coque (2) est relié de manière amovible ou permanente à la barre de retenue (3), en particulier à une barre de retenue en matériau métallique, de préférence par vissage et/ou brasage et/ou collage et/ou serrage.

5. Dispositif selon l'une quelconque des revendications précédentes, **caractérisé en ce qu**'entre l'élément de coque (2) et la barre de retenue (3) et/ou dans la barre de retenue (3) et/ou entre la barre de retenue (3) et la poignée (4) est disposée une liaison articulée pouvant être fixée (6) pour un ajustement angulaire.

6. Dispositif selon l'une quelconque des revendications précédentes, **caractérisé en ce que** la portion cylindrique circulaire de l'élément de coque (2) présente une valeur angulaire inférieure à 180°, de préférence comprise entre 90° et 180°.

7. Dispositif selon l'une quelconque des revendications précédentes, **caractérisé en ce que** le logement est un œil de pied de bielle (9), en particulier le gros œil de pied de bielle d'une bielle (7) d'un moteur à combustion interne et le coussinet de palier est un coussinet de palier de bielle (5), l'arbre étant de préférence un vilebrequin (10).

8. Dispositif selon la revendication 7, **caractérisé en ce que** l'œil de pied de bielle (9) est fabriqué sous forme divisée, de préférence craquée, et/ou est fabriqué avec une partie de chapeau de bielle vissable.

9. Dispositif selon l'une quelconque des revendications précédentes, **caractérisé en ce que** l'épaisseur de paroi et le rayon du cylindre circulaire de l'élément de coque (2) sont au moins en partie adaptés au coussinet de palier (5) devant être reculé, de préférence sont approximativement au moins en partie identiques au coussinet de palier (5) devant être reculé.

10. Dispositif selon l'une quelconque des revendications précédentes, **caractérisé en ce que** la structure de paroi de l'élément de coque (2) présente la même structure de paroi que le coussinet de palier (5), un élément de coque (2) devant être utilisé avec un coussinet de palier de bielle ressorti (5) présentant de préférence la même structure de paroi que celui-ci et/ou de préférence l'élément de coque (2) étant fabriqué à partir d'un tel coussinet de palier de bielle (5).

11. Procédé pour faire reculer un coussinet de palier ressorti au moins en partie d'un logement sur un arbre, au moyen d'un dispositif
**caractérisé en ce que**
le dispositif est réalisé sous forme d'outil manuel (1)
**en ce que** l'outil (1) présente un élément de coque (2) en forme de portion de cylindre circulaire,
**en ce qu'**une barre de retenue (3) avec une poignée (4) à l'extrémité est prévue de manière à dépasser au niveau du côté convexe de la paroi de l'élément de coque,
l'élément de coque (2) de l'outil (1) étant posé, au moyen de la poignée (4) et de la barre de retenue (3) s'y raccordant, par engagement par correspondance de formes sur l'arbre (10) devant le coussinet de palier ressorti (5), puis, par déplacement dans la direction périphérique une pression radiale étant appliquée sur le coussinet de palier (5) et ce dernier étant reculé dans le logement (9).
